# EUROPÄISCHE PATENTSCHRIFT

(11) **EP 0 984 106 B1**
(45) Veröffentlichungstag und Bekanntmachung des Hinweises auf die Patenterteilung: **16.07.2003**
(21) Anmeldenummer: 99115472.5
(22) Anmeldetag: 05.08.1999
(51) Int. Cl.: E03B 7/07, B01D 29/11, B01D 35/02

(54) **Sichtfilter für sanitäre Wasserleitungen**
Transparent filter for water conduits of sanitary installations
Filtre transparent pour conduites d'eau d' installation sanitaires

(30) Priorität: 05.09.1998 DE 19840564
(43) Veröffentlichungstag der Anmeldung: 08.03.2000
(73) Patentinhaber: DIETER WILDFANG GmbH, D-79379 Müllheim (DE)
(72) Erfinder:
(74) Vertreter: Maucher, Wolfgang, Dipl.-Ing.

(56) Entgegenhaltungen:
- DE-U- 1 777 607
- DE-U- 8 418 964
- GB-A- 1 551 231
- US-A- 4 654 141

## Beschreibung

Die Erfindung betrifft einen Sichtfilter zum Einbau in eine sanitäre Wasserleitung, mit einem von außen einsehbaren Filtergehäuse, mit als Gehäuse-Stirnendabdichtungen ausgebildeten Gehäuseanschlüssen, von denen ein erster Gehäuseanschluß bis zu einem Einsteckanschlag in das Filtergehäuse derart einsetzbar ist, daß ein am ersten Gehäuseanschluß vorgesehener und eine stirnendseitige Gehäuse-Durchstecköffnung durchsetzender Anschlußstutzen nach außen vorsteht, und von denen ein zweiter Gehäuseanschluß mit einem Außengewinde an einem am Gehäuse-Innenumfang vorgesehenen Innengewinde verschraubbar ist sowie mit einem im Filtergehäuse auswechselbar gehaltenen Filtereinsatz.

Solche Sichtfilter werden häufig bei Spülkästen, Eckventil-Anschlußarmaturen und den beispielsweise bei Wasch- und Geschirrspülmaschinen üblichen Magnetventilen verwendet, um Funktionsstörungen durch die im Leitungswasser mitströmenden Schmutzpartikel zu vermeiden.

So ist auch bereits ein Sichtfilter der eingangs erwähnten Art bekannt, der in Verbindung mit einer flexiblen Schlauchleitung eingesetzt wird. Dieser vorbekannte Sichtfilter weist ein von außen einsehbares Filtergehäuse auf, dem beidseits als Gehäuse-Stirnendabdichtungen ausgebildete Gehäuseanschlüsse zugeordnet sind. Während einer dieser Gehäuseanschlüsse mit einem Außengewinde an einem am Gehäuse-Innenumfang vorgesehenen Innengewinde verschraubbar ist, ist der andere Gehäuseanschluß bis zu einem Einsteckanschlag derart in das Filtergehäuse einsetzbar, daß ein an diesem Gehäuseanschluß vorgesehener und eine stirnendseitige Gehäuse-Durchstecköffnung durchsetzender Anschlußstutzen nach außen vorsteht. Der Anschlußstutzen des vorbekannten Sichtfilters ist als Schlauchnippel ausgebildet, auf dem die flexible Schlauchleitung aufgeschoben und beispielsweise mittels einer Schlauchmanschette gesichert werden kann.

Zum Warten und Auswechseln des Filtereinsatzes kann das Filtergehäuse an dem am Einsteckanschlag anliegenden ersten Gehäuseanschluß verdreht und damit die zwischen dem Filtergehäuse und dem zweiten Gehäuseanschluß vorgesehene Schraubverbindung gelöst werden. Nach Abheben des zweiten Gehäuseanschlusses vom Filtergehäuse ist der Filtereinsatz aus dem Filtergehäuse entnehmbar. Dazu muß jedoch die Gehäuseöffnung freigelegt und die benachbarte flexible Schlauchleitung zur Seite gedreht werden.

Ein solches Verdrehen birgt bei Wasserleitungen aus Kupfer oder einem anderen unelastischen Material jedoch die Gefahr, daß das Material spätestens nach einem wiederholten Umbiegen ermüdet und bricht.

Es besteht daher die Aufgabe, einen Sichtfilter der eingangs erwähnten Art zu schaffen, bei dem der Filtereinsatz mit geringem Aufwand aus dem Filtergehäuse entnommen werden kann, ohne daß zum Öffnen des Filtergehäuses ein Umbiegen der benachbarten Rohrleitung erforderlich wäre.

Die erfindungsgemäße Lösung dieser Aufgabe besteht bei dem Sichtfilter der eingangs erwähnten Art insbesondere darin, daß zum Verbinden des Anschlußstutzens des ersten Gehäuseanschlusses mit einem benachbarten Leitungsende eine Klemmringverbindung mit einem Schraubkörper vorgesehen ist und daß der Schraubkörper eine Außenquerschnittsform hat, deren Größtmaß kleiner ist als der lichte Durchmesser der Gehäuse-Durchstecköffnung.

Der erfindungsgemäße Sichtfilter weist zum Anschluß an eine unelastische Wasserleitung eine Klemmringverbindung auf, deren Schraubkörper eine Außenquerschnittsform mit einem Größtmaß hat, das kleiner ist als der lichte Durchmesser der am Filtergehäuse vorgesehenen und vom Anschlußstutzen durchsetzen Durchstecköffnung. Somit läßt sich das Filtergehäuse entlang dem ersten Gewindeanschluß bis über den Schraubkörper so weit verschieben, daß der Filtereinsatz aus dem Filtergehäuse gelöst und an der Seite der Wasserleitung entnommen werden kann. Da bei dem erfindungsgemäßen Sichtfilter somit beispielsweise auf eine globige Schlauchmanschette verzichtet werden kann, die zwar ein Verdrehen des Filtergehäuses am ersten Gehäuseanschluß -, nicht aber ein Verschieben des Filtergehäuses entlang dieses Gehäuseanschlusses erlaubt, läßt sich der Filtereinsatz mit geringem Aufwand aus dem Filtergehäuse des erfindungsgemäßen Sichtfilters entnehmen, ohne daß ein Verbiegen, eine Materialermüdung oder gar ein Bruch an der benachbarten Rohrleitung zu befürchten wäre.

Um den erfindungsgemäßen Sichtfilter sicher und fest an der benachbarten und aus Kupfer oder dergleichen unelastischem Material hergestellten Rohrleitung montieren zu können, ist es vorteilhaft, wenn das den benachbarten Leitungsabschnitt aufnehmende Stutzenende des Anschlußstutzens ein Außengewinde trägt, auf das ein Schraubkörper mit einem Innengewinde aufschraubbar ist, der eine kegelstumpfförmige Konus-Innenfläche aufweist, und daß ein geschlitzter und von der Konus-Innenfläche des Schraubkörpers beaufschlagter Klemmring vorgesehen ist, der durch Aufschrauben des Schraubkörpers auf das Stutzenende radial nach innen gegen die Rohrleitung verspannbar ist.

Die erfindungsgemäß verwendete Klemmringverbindung erlaubt darüber hinaus auch eine besonders dichte Verbindung zwischen dem Filtergehäuse und der benachbarten Rohrleitung, wenn die Klemmringverbindung ein Dichtelement aus elastischem Material aufweist, das vom Klemmring durch eine Ringscheibe getrennt und in dem vom Rohrleitungs-Außenumfang und Schraubkörper-Innenmantel beziehungsweise von der Ringscheibe und der benachbarten Stirnfläche des Anschlußstutzens umschlossenen Spaltraum angeordnet ist.

Um den erfindungsgemäßen Sichtfilter möglichst vielseitig einsetzen zu können, ist es zweckmäßig, wenn im Anschlußstutzen ein Rückflußverhinderer, ein Durchflußmengenregler eine Drossel und/oder ein Zusatzfilter vorgesehen ist. Weist der erfindungsgemäße Sichtfilter beispielsweise einen im Anschlußstutzen angeordneten und dort beispielsweise reibschlüssig gehaltenen Rückflußverhinderer auf, so wird beim Aufschrauben des Filtergehäuses in vorteilhafter Weise vermieden, daß das in dem oberhalb des Sichtfilters angeordneten Leitungsabschnitt vorhandene Restwasser auslaufen und den umliegenden Boden sowie die benachbarten Wände verschmutzen kann. Ein solcher Rückflußverhinderer erleichtert daher wesentlich die Handhabung und Wartung des erfindungsgemäßen Sichtfilters.

Bevorzugt wird eine Ausführungsform, bei der das Filtergehäuse als Gehäusekäfig ausgebildet ist, in den ein den Filtereinsatz aufnehmendes Rohrstück aus durchsichtigem Material einsetzbar ist, und daß dieses Rohrstück zwischen dem ersten und dem zweiten Gehäuseanschluß einspannbar ist. Bei dieser Ausführungsform ist das Filtergehäuse als gut einsehbarer Filterkäfig ausgebildet. Da der den Filtereinsatz aufnehmende und im Filterkäfig angeordnete Rohrabschnitt aus durchsichtigem Material hergestellt ist, läßt sich der Filtereinsatz durch den Filterkäfig hindurch einsehen.

Die Handhabung des erfindungsgemäßen Sichtfilters wird noch zusätzlich erleichtert, wenn zwischen dem Rohrstück und den benachbarten Gehäuseanschlüssen beidseits jeweils ein Dichtring vorgesehen ist und wenn der Filtereinsatz mit einem dieser Dichtringe einstückig verbunden ist. Bei aufgeschraubtem Filtergehäuse läßt sich der Filtereinsatz somit leicht an dem mit ihm einstückig verbundenen Dichtring ergreifen und aus dem Filterkäfig beziehungsweise dem darin befindlichen Rohrstück entnehmen.

Besonders vorteilhaft ist es, wenn der Filtereinsatz als Hut-Filtersieb ausgebildet ist, dessen Einströmöffnung auf der Zuströmseite des Sichtfilters angeordnet ist. Ein solches, sich in Strömungsrichtung erstreckendes Hut-Filtersieb kann im Inneren seiner Hutform zahlreiche Schmutzpartikel auffangen, ohne daß dadurch die Durchfluß- und Siebleistung dieses Filtersiebes wesentlich beeinträchtigt wird.

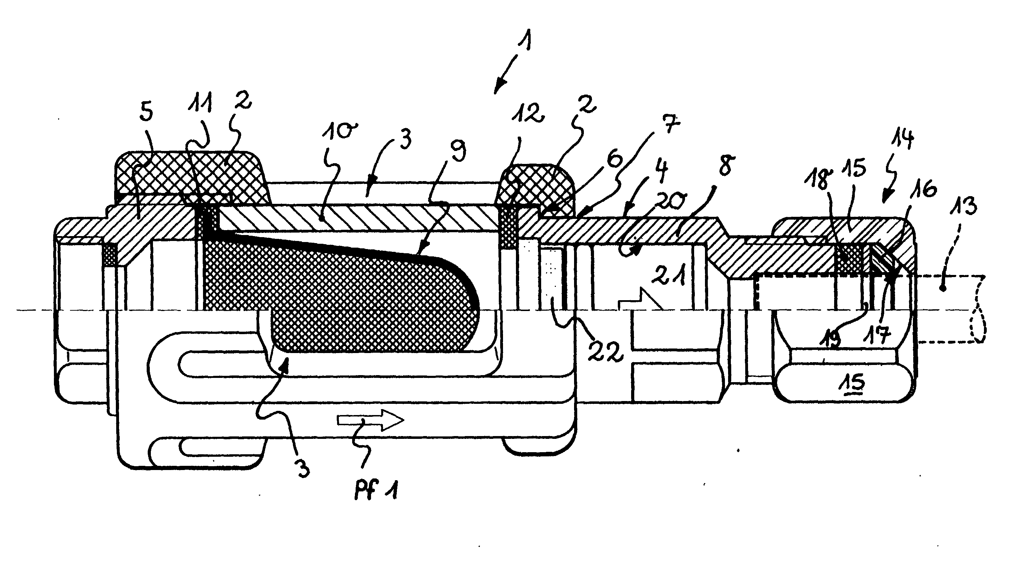

Weitere Merkmale der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

In der einzigen Figur ist ein Sichtfilter 1 dargestellt, der zum Einbau in eine sanitäre Wasserleitung bestimmt ist. Der Sichtfilter 1 weist ein von außen einsehbares Filtergehäuse 2 auf, das hier als Gehäusekäfig ausgebildet ist. An dem im wesentlichen hülsenförmigen Filtergehäuse 2, das an dem Hülsenumfang seines Filtergehäuses 2 mehrere Fensteröffnungen 3 hat, sind an den gegenüberliegenden Stirnenden Gehäuseanschlüsse 4, 5 vorgesehen, die als Gehäuse-Stirnendabdichtungen ausgebildet sind. Von den Gehäuseanschlüssen 4, 5 ist ein erster Gehäuseanschluß 4 bis zu einem Einsteckanschlag 6 in das Filtergehäuse 2 derart einsetzbar, daß ein am ersten Gehäuseanschluß 4 vorgesehener und eine stirnendseitige Gehäuse-Durchstecköffnung 7 durchsetzender Anschlußstutzen 8 nach außen vorsteht.

Das Filtergehäuse 2 weist auf seiner dem Anschlußstutzen 8 gegenüberliegenden Stirnseite einen zweiten Gehäuseanschluß 5 mit einem Außengewinde auf, der mit einem am Gehäuse-Innenumfang vorgesehenen Innengewinde verschraubbar ist. Im Filtergehäuse 2 ist ein Filtereinsatz 9 vorgesehen, der hier als Hut-Filtersieb ausgebildet ist. Der Filtereinsatz 9 ist in einem Rohrstück 10 aus durchsichtigem Glas- oder Kunststoffmaterial angeordnet, das im Filtergehäuse 2 zwischen dem ersten und dem zweiten Gehäuseanschluß 4, 5 eingespannt ist.

Zwischen dem Rohrstück 10 und den benachbarten Gehäuseanschlüssen 4, 5 ist beidseits jeweils ein Dichtring 11, 12 vorgesehen, von denen der Dichtring 11 mit dem Filtereinsatz 9 einstückig verbunden ist.

Zum Verbinden des ersten Gehäuseanschlusses 4 mit einem hier nur durch gestrichelte Linien 13 angedeuteten, benachbarten Leitungsende weist der Sichtfilter 1 eine Klemmringverbindung 14 auf. Dazu trägt das den benachbarten Leitungsabschnitt 13 aufnehmende Stutzenende des Anschlußstutzens 8 ein Außengewinde, auf das ein Schraubkörper 15 aufschraubbar ist. Der Schraubkörper 15 ist hier als Spannschraube mit einem Außensechskant ausgebildet. Zwischen dem das benachbarte Leitungsende 13 aufnehmenden Anschlußstutzen 8 und dem Schraubkörper 15 ist ein geschlitzter Klemmring 16 vorgesehen den der Schraubkörper 15 mit seiner kegelstumpfförmigen Konus-Innenfläche 17 beaufschlagt. Durch Aufschrauben des Schraubkörpers 15 auf das Stutzenende des Anschlußstutzens 8 kann der vom Schraubkörper 15 beaufschlagte Klemmring 16 radial nach innen gegen die Rohrleitung 13 verspannt werden.

Die durch die Klemmringverbindung 14 erreichbare feste und dauerhafte Verbindung des Sichtfilters 1 am Leitungsende 13 der Rohrleitung läßt sich durch ein Dichtelement 18 aus elastischem Material abdichten, das vom Klemmring 16 durch eine Ringscheibe 19 getrennt und in dem vom Außenumfang der Rohrleitung 13 und dem Schraubkörper-Innenmantel beziehungsweise von der Ringscheibe 19 und der benachbarten Stirnfläche des Anschlußstutzens 8 umschlossenen Spaltraum angeordnet ist.

Beim Aufschrauben des Schraubkörpers 15 auf den Anschlußstutzen 8 und beim Verspannen des Klemmringes 16 am Leitungsende 13 wird auch das ringförmige Dichtelement 18 radial aufgeweitet, so daß auch in diesem Bereich eine dauerhafte und feste Verbindung mit der Rohrleitung begünstigt wird.

Der Schraubkörper 15 der Klemmringverbindung 14 hat eine Außenquerschnittsform, deren Größtmaß kleiner ist als der lichte Durchmesser der Durchstecköffnung 7. Somit kann das Filtergehäuse 2 zum Warten und Auswechseln des Filtereinsatzes 9 an dem am Einsteckanschlag 6 anliegenden ersten Gehäuseanschluß 4 verdreht und damit die zwischen dem Filtergehäuse 2 und dem zweiten Gehäuseanschluß 5 vorgesehene Schraubverbindung gelöst werden, um den Filtereinsatz 9 an dem einstückig angeformten Dichtring 11 zu ergreifen und aus dem Filtergehäuse 2 zu entnehmen. Dazu läßt sich das Filtergehäuse 2 nach Lösen der zwischen dem Filtergehäuse 2 und dem Gehäuseanschluß 5 vorgesehenen Schraubverbindung entlang dem ersten Gewindeanschluß 4 bis über den Schraubkörper 15 so weit verschieben, daß der Filtereinsatz 9 und das Rohrstück 10 seitlich entnehmbar sind.

Da bei dem hier dargestellten Sichtfilter 1 beispielsweise auf eine globige Schlauchmanschette verzichtet werden kann, die zwar ein Verdrehen des Filtergehäuses 2 am ersten Gehäuseanschluß 4 -, nicht aber ein Verschieben des Filtergehäuses 2 entlang dem Gehäuseanschluß 4 erlaubt, läßt sich der Filtereinsatz 9 mit geringem Aufwand auswechseln, ohne daß eine der an den Sichtfilter 1 angrenzenden Leitungsabschnitte umgebogen werden müßte. Somit ist beim Auswechseln des im Sichtfilter 1 vorgesehenen Filtereinsatzes 9 ein Material ermüdendes Umbiegen nicht erforderlich und auch ein Bruch der Rohrleitung im Bereich solcher Biegezonen nicht zu befürchten.

Die Einströmöffnung des als Hut-Filtersieb ausgebildeten Filtereinsatzes 9 ist auf der Zuströmseite des üblicherweise in Strömungsrichtung Pf1 durchströmten Sichtfilters 1 vorgesehen. Somit können sich in dem Hut-Filtersieb 9 Schmutzpartikel und dergleichen ansammeln, ohne daß derartige Schmutzpartikel die Durchström- und Filterleistung des Sichtfilters 1 wesentlich beeinträchtigen könnten.

Der Anschlußstutzen 8 weist an seinem dem Filtergehäuse 2 zugewandten Stirnendbereich eine Aufnahmehöhlung 20 auf, in die ein patronenförmiger Rückflußverhinderer 21 und zuströmseitig davor ein Durchflußmengenregler 22 vorgesehen ist. Da insbesondere der Rückflußverhinderer 21 reibschlüssig in der Aufnahmehöhlung 20 des Anschlußstutzens 8 gehalten ist, kann das Filtergehäuse 2 aufgeschraubt und der im Rohrstück 10 enthaltene Filtereinsatz 9 entnommen werden, ohne daß dabei das in dem eventuell höher gelegenen Leitungsabschnitt 13 vorhandene Restwasser auslaufen könnte.

Der Filtereinsatz 9 kann einen als Kunststoffilter oder auch als Metallsieb ausgebildeten Siebfilter aufweisen. Möglich ist auch, daß der Filtereinsatz 2 ein als Siebfilter dienendes Kunststoffgewebe hat.

Auf der dem Anschlußstutzen 8 abgewandten Seite ist das Sichtfilter 1 mit einem hier nicht weiter dargestellten Leitungsende verbunden. Das hier nicht weiter sichtbare Leitungsende weist ein Außengewinde auf, das in das stirnseitige Innengewinde des Gehäuseanschlusses 5 einschraubbar ist.

Bei dem hier dargestellten Sichtfilter 1 kann der Filtereinsatz 9 mit geringem Aufwand aus dem Filtergehäuse 2 entnommen werden, ohne daß zum Öffnen des Filtergehäuses 2 ein Umbiegen der benachbarten Rohrleitungen erforderlich wäre.

## Patentansprüche

1. Sichtfilter (1) zum Einbau in eine sanitäre Wasserleitung, mit einem von außen einsehbaren Filtergehäuse (2), mit als Gehäuse-Stirnendabdichtungen ausgebildeten Gehäuseanschlüssen (4, 5), von denen ein erster Gehäuseanschluß (4) bis zu einem Einsteckanschlag (6) in das Filtergehäuse (2) derart einsetzbar ist, daß ein am ersten Gehäuseanschluß (4) vorgesehener und eine stirnendseitige Gehäuse-Durchstecköffnung (7) durchsetzender Anschlußstutzen (8) nach außen vorsteht und von denen ein zweiter Gehäuseanschluß (5) mit einem Außengewinde an einem am Gehäuse-Innenumfang vorgesehenen Innengewinde verschraubbar ist, sowie mit einem im Filtergehäuse (2) auswechselbar gehaltenen Filtereinsatz (9), **dadurch gekennzeichnet, daß** zum Verbinden des Anschlußstutzens (8) des ersten Gehäuseanschlusses (4) mit einem benachbarten Leitungsende (13) eine Klemmringverbindung (14) mit einem Schraubkörper (15) vorgesehen ist, und daß der Schraubkörper (15) eine Außenquerschnittsform hat, deren Größtmaß kleiner ist als der lichte Durchmesser der Gehäuse-Durchstecköffnung (7).

2. Sichtfilter nach Anspruch 1, **dadurch gekennzeichnet, daß** das den benachbarten Leitungsabschnitt (13) aufnehmende Stutzenende des Anschlußstutzens (8) ein Außengewinde trägt, auf das ein Schraubkörper (15) mit einem Innengewinde aufschraubbar ist, der eine kegelstumpfförmige Konus-Innenfläche (17) aufweist und daß ein geschlitzter und von der Konus-Innenfläche (17) des Schraubkörpers (15) beaufschlagter Klemmring (16) vorgesehen ist, der durch Aufschrauben des Schraubkörpers (15) auf das Stutzenende radial nach innen gegen die Rohrleitung (13) verspannbar ist.

3. Sichtfilter nach Anspruch 1 oder 2, **dadurch gekennzeichnet, daß** die Klemmringverbindung (14) ein Dichtelement (18) aus elastischem Material aufweist, das vom Klemmring (16) durch eine Ringscheibe (19) getrennt und in dem vom Rohrleitungs-Außenumfang und Schraubkörper-Innenmantel beziehungsweise von der Ringscheibe (19 und der benachbarten Stirnfläche des Anschlußstutzens (8) umschlossenen Spaltraum angeordnet ist.

4. Sichtfilter nach einem der Ansprüche 1 bis 3, **dadurch gekennzeichnet, daß** im Anschlußstutzen (8) ein Rückflußverhinderer (21), ein Durchflußmengenregler (22), eine Drossel und/oder ein Zusatzfilter vorgesehen ist.

5. Sichtfilter nach einem der Ansprüche 1 bis 4, **dadurch gekennzeichnet, daß** das Filtergehäuse (2) als Gehäusekäfig ausgebildet ist, in das ein den Filtereinsatz (9) aufnehmendes Rohrstück (10) aus durchsichtigem Material einsetzbar ist, und daß dieses Rohrstück (10) zwischen dem ersten und dem zweiten Gehäuseanschluß (4, 5) eingespannt ist.

6. Sichtfilter nach einem der Ansprüche 1 bis 5, **dadurch gekennzeichnet, daß** zwischen dem Rohrstück (10) und den benachbarten Gehäuseanschlüssen (4, 5) beidseits jeweils ein Dichtring (11, 12) vorgesehen ist, und daß der Filtereinsatz (9) mit einem (11) dieser Dichtringe einstückig verbunden ist.

7. Sichtfilter nach einem der Ansprüche 1 bis 6, **dadurch gekennzeichnet, daß** der Filtereinsatz (9) als Hut-Filtersieb ausgebildet ist, dessen Einströmöffnung auf der Zuströmseite des Sichtfilters (1) angeordnet ist.

## Claims

1. Inspection filter (1) for incorporation in a sanitary water conduit, sad filter having a filter housing (2) which can be inspected from externally, housing connections (4, 5) which are in the form of front end housing seals, a first housing connection (4) thereof being insertable into the filter housing (2) as far as an insertion stop member (6) in such a manner that a connection-piece (8), which is provided on the first housing connection (4) and traverses a through-aperture (7) in the end face of the housing, protrudes outwardly, and a second housing connection (5) thereof, having an external thread and being screw-connectable to an internal thread provided on the inner periphery of the housing, as well as a filter insert (9) which is interchangeably retained in the filter housing (2), **characterised in that**, in order to connect the connection-piece (8) of the first housing connection (4) to an adjacent conduit end (13), a clamping ring connection (14) is provided with a screw body (15), and **in that** the screw body (15) has an external cross-sectional form, the greatest dimension of which is smaller than the inside diameter of the housing through-aperture (7).

2. Inspection filter according to claim 1, **characterised in that** the end of the connection-piece (8) accommodating the adjacent conduit portion (13) is provided with an external thread, onto which a screw body (15), having an internal thread, is screw-connectable, said body having a frustoconical internal face (17), and **in that** a slotted clamping ring (16) is provided, which is acted upon by the internal face (17) of the screw body (15) and is tensionable radially inwardly against the conduit (13) by screw-connecting the screw body (15) onto the end of the connection-piece.

3. Inspection filter according to claim 1 or 2, **characterised in that** the clamping ring connection (14) includes a sealing member (18), which is formed from resilient material, said member being separated from the clamping ring (16) by an annular disc (19) and being disposed in the gap surrounded by the outer periphery of the conduit and the internal surface of the screw body or respectively by the annular disc (19) and the adjacent end face of the connection-piece (8).

4. Inspection filter according to one of claims 1 to 3, **characterised in that** a means (21) for preventing reflux, a throughflow quantity regulator (22), a shut-off means and/or an additional filter are provided in the connection-piece (8).

5. Inspection filter according to one of claims 1 to 4, **characterised in that** the filter housing (2) is in the form of a housing cage, into which a tubular piece (10) is insertable, said tubular piece accommodating the filter insert (9) and being formed from transparent material, and **in that** this tubular piece (10) is clamped in position between the first and second housing connections (4, 5).

6. Inspection filter according to one of claims 1 to 5, **characterised in that** a respective sealing ring (11, 12) is provided on each side between the tubular piece (10) and the adjacent housing connections (4, 5), and **in that** the filter insert (9) is integrally connected to one (11) of these sealing rings.

7. Inspection filter according to one of claims 1 to 6, **characterised in that** the filter insert (9) is in the form of a "Top-hat"-shaped filter screen, the inlet aperture of which is disposed on the inlet side of the inspection filter (1).

## Revendications

1. Filtre transparent (1) destiné à l'installation dans une conduite d'eau sanitaire, avec un boîtier de filtre visible de l'extérieur (2), avec des raccords de boîtier (4, 5) configurés comme des obturations d'extrémités frontales de boîtier, parmi lesquels un premier raccord de boîtier (4) peut être introduit jusqu'à une butée à emboîtement (6) dans le boîtier de filtre (2) de telle sorte qu'un embout de raccord (8) traversant un orifice frontal (7) à travers le boîtier et prévu sur le premier raccord de boîtier (4) déborde vers l'extérieur, et parmi lesquels un second raccord de boîtier (5) peut être vissé avec un filetage extérieur dans un taraudage prévu sur l'étendue interne du boîtier, ainsi qu'avec un filtre de rechange (9) placé dans le boîtier de filtre (2), **caractérisé en ce qu'**une connexion par anneau de serrage (14) avec un corps de vis (15) est prévue pour la jonction de l'embout de raccord (8) du premier raccord de boîtier (4) à une extrémité de conduite voisine (13), et **en ce que** le corps de vis (15) a une forme de section transversale externe dont la dimension maximale est inférieure au diamètre intérieur de l'orifice (7) traversant le boîtier.

2. Filtre transparent selon le revendication 1, **caractérisé en ce que** l'extrémité d'embout du raccord (8) recevant le tronçon de conduite adjacent (13) porte un filetage extérieur sur lequel peut être vissé un corps de vis (15) avec un taraudage, qui comporte une surface interne conique (17) de forme tronconique et **en ce qu'**il est prévu un anneau de serrage (16) à fente chargé par la surface interne conique (17) du corps de vis (15) qui peut être serré radialement vers l'intérieur contre la canalisation (13) par le vissage du corps de vis (15) sur l'extrémité d'embout.

3. Filtre transparent selon la revendication 1 ou 2, **caractérisé en ce que** la connexion par anneau de serrage (14) comporte un élément d'étanchéité (18) composé d'un matériau élastique qui est séparé de l'anneau de serrage (16) par une rondelle circulaire (19) et qui est disposé dans l'espace à fente entouré du pourtour de la canalisation et de l'enveloppe intérieure du corps de vis, et de la rondelle (19) et de la surface frontale adjacente de l'embout de raccord (8).

4. Filtre transparent selon l'une quelconque des revendications 1 à 3, **caractérisé en ce qu'**un clapet de non-retour (21), un régulateur de débit (22), un étranglement et/ou un filtre supplémentaire sont prévus dans l'embout du raccord (8).

5. Filtre transparent selon l'une quelconque des revendications 1 à 4, **caractérisé en ce que** le boîtier de filtre (2) a la forme d'une cage dans laquelle peut être introduit un segment de tuyau (10) en matériau transparent recevant le filtre de rechange (9) et **en ce que** ce segment de tuyau (10) est inséré entre le premier et le second raccord de boîtier (4, 5).

6. Filtre transparent selon l'une quelconque des revendications 1 à 5 **caractérisé en ce qu'**un anneau d'étanchéité (11, 12) est prévu respectivement des deux côtés entre le segment de tuyau (10) et les raccords de boîtiers (4, 5) adjacents, et **en ce que** le filtre de rechange (9) est relié d'un seul tenant à l'un (11) de ces anneaux d'étanchéité.

7. Filtre transparent selon l'une des revendications 1 à 6 **caractérisé en ce que** le filtre de rechange (9) est configuré comme un tamis filtrant en forme de chapeau dont l'orifice d'admission est disposé sur la face d'afflux du filtre transparent (1).
